# EUROPÄISCHE PATENTSCHRIFT

(11) **EP 0 502 388 B1**
(45) Veröffentlichungstag und Bekanntmachung des Hinweises auf die Patenterteilung: **14.01.1998**
(21) Anmeldenummer: 92103002.9
(22) Anmeldetag: 22.02.1992
(51) Int. Cl.: G01S 17/10

(54) **Verfahren und Vorrichtung zum Messen von Entfernungen**
Method and device for measuring distances
Procédé et dispositif télémètrique

(30) Priorität: 05.03.1991 DE 4106892
(43) Veröffentlichungstag der Anmeldung: 09.09.1992
(73) Patentinhaber: Zeiss-Eltro Optronic GmbH, 73447 Oberkochen (DE)
(72) Erfinder: Geiss, Wolfgang, W-7080 Aalen (DE); Heinrich, Harald, W-7080 Aalen (DE); Heppner, Joachim, Dr., W-7082 Oberkochen (DE)
(74) Vertreter: Hummel, Adam

(56) Entgegenhaltungen:
- DE-A- 3 620 226
- US-A- 4 289 397
- REVIEW OF SCIENTIFIC INSTRUMENTS Bd. 54, Nr. 12, 1. Dezember 1983, NEW YORK US Seiten 1790 - 1792 KYLE ET AL 'CIRCUIT FOR TIME-RESOLVED PHOTON COUNTING'

## Beschreibung

Die Erfindung betrifft ein Verfahren zum Messen von Entfernungen, bei dem Lichtimpulse auf ein entferntes Ziel gesendet und die Laufzeit eines vom getroffenen Ziel auf eine Meßvorrichtung reflektierten Lichtimpulses gemessen wird sowie eine Vorrichtung zur Durchführung dieses Verfahrens.

Von opto-elektronischen Entfernungsmessern, beispielsweise Laserentfernungsmessern, werden kohärente Lichtimpulse ausgesendet, die von angepeilten Zielen auf den Entfernungsmesser zurückreflektiert werden. Aus der Zeit, die zwischen Aussenden des Laser-Lichtimpulses und dem Wiederauftreffen des reflektierten Laser-Lichtimpulses auf der Empfangsvorrichtung des Laserentfernungsmessers vergeht, wird von einer nachgeschalteten Elektronik die Entfernung des angepeilten Zieles berechnet. Zur Durchführung dieser Berechnung wird nach dem bekannten Stand der Technik mit dem Aussenden eines Laser-Lichtimpulses mindestens ein Zähler gestartet. Dieser Zähler akkumuliert die Zahl von Zeitintervallen, die bis zum Eintreffen eines vom Ziel reflektierten Lichtimpulses vergehen. Mit dem Eintreffen des Lichtimpulses wird der Zähler gestoppt. Für den Fall, daß mehrere, von verschiedenen Zielen reflektierte Lichtimpulse auf der Empfangsvorrichtung des Laserentfernungsmessers eintreffen, können mehrere, mit Aussenden der Lichtimpulse gestartete Zähler nacheinander gestoppt werden. Ein derartiges Meßverfahren und eine Anordnung zur Durchführung des Verfahrens ist veröffentlicht in "Laser Handbook", Volume 2, edited by F.T. Arecchi und E.O. Schulz-Dubois, North-Holland Publishing Company, Seiten 1783-1787.

Nachteilig bei diesem bekannten Stand der Technik ist, daß die Verwendung der konventionellen Zählerbausteine erfordert, die abzuspeichernden Zählerzwischenwerte mit der vollen AufLösung des Zählers (beispielsweise 16 bit) in einen Speicher zu schreiben. Die Übernahme der Zählerzwischenwerte in den Speicher muß dann innerhalb eines Taktzyklus des Zählers erfolgen. Wegen des hohen Aufwandes für die Schaltung verzichtet man zumeist auf die Möglichkeit zur Speicherung aller möglichen Zählerzwischenstände und beschränkt sich auf die Speicherung von zwei oder drei Zählerwerten.

Der Erfindung liegt die Aufgabe zugrunde, einen Zähler für Laserentfernungsmesser zu realisieren, der die Erfassung sämtlicher in einem Meßzyklus vorkommenden Entfernungssignale ermöglicht.

Diese Aufgabe wird durch die Merkmale des Anspruchs gelöst. Es besteht darin, daß die Dauer eines Meßzyklus vorgegeben wird, daß ein Meßzyklus in Zeitintervalle eingeteilt wird, daß jedem Zeitintervall ein Speicherplatz in einem digitalen Speicher zugeordnet wird. daß ein von einem Ziel reflektierter Lichtimpuls bei seinem Auftreffen auf die Meßvorrichtung in einen Logikimpuls umgewandelt und dem präsenten Zeitintervall als Logikpegel zugeordnet wird, daß jedem Zeitintervall, in dem kein Lichtimpuls auftritt. ein entsprechend komplementärer Logikpegel zugeordnet wird, daß für jedes Zeitintervall der ihm zugeordnete Logikpegel gespeichert wird, und daß die in den Speicherplätzen als Logikpegel gespeicherten Ereignisse mit einer Signalauswerteelektronik ausgelesen und weiterverarbeitet werden.

Bei einer zweckmäßigen Vorrichtung zur Durchführung der Erfindung ist ein Oszillator als Taktgeber mit dem Takteingang eines seriellen, digitalen Speichers verbunden, vor dem Speicher ist ein optischer Empfänger angeordnet, welcher auftreffende Lichtimpulse in Logikimpulse wandelt, am seriellen, diqitalen Speicher ist ein zweiter Eingang für die Logikimpulse vorgesehen und der Ausgang des seriellen, digitalen Speichers ist mit einem Mikroprozessor verbunden.

Die mit der Erfindung erzielten Vorteile bestehen insbesondere darin, daß sie die Realisierung eines Zählerkonzeptes mit der Möglichkeit zur Speicherung aller möglichen Zählerzwischenstände mit geringerem elektronischen Aufwand zuläßt, als dies aus dem Stand der Technik bekannt ist. Erfindungsgemäß kann auf einen addierenden Zählerbaustein völlig verzichtet werden und statt dessen der Takt des Oszillators direkt in den seriellen Speicher geschrieben werden, und zwar codiert mit der Information, ob ein Ergebnis stattgefunden hat oder nicht. Da diese Information in einem einzigen Bit untergebracht werden kann, ist nur eine um die Zählerauflösung reduzierte Speichertiefe notwendig. Die Erfindung läßt sich deshalb mit großem Vorteil insbesondere bei der Entfernungsmessung zu diffus-reflektierenden Gegenständen im Freien verwenden, da alle meßbaren Entfernungswerte festgehalten und zur Anzeige gebracht werden.

Ein Ausführungsbeispiel der Erfindung ist in der Zeichnung dargestellt und wird im folgenden näher beschrieben. Es zeigen
- Figur 1: eine schematische Darstellung des Konzeptes des erfindungsgemäßen Verfahrens
- Figur 2: ein Blockdiagramm für die Vorrichtung zur Durchführung des erfindungsgemäßen Verfahrens

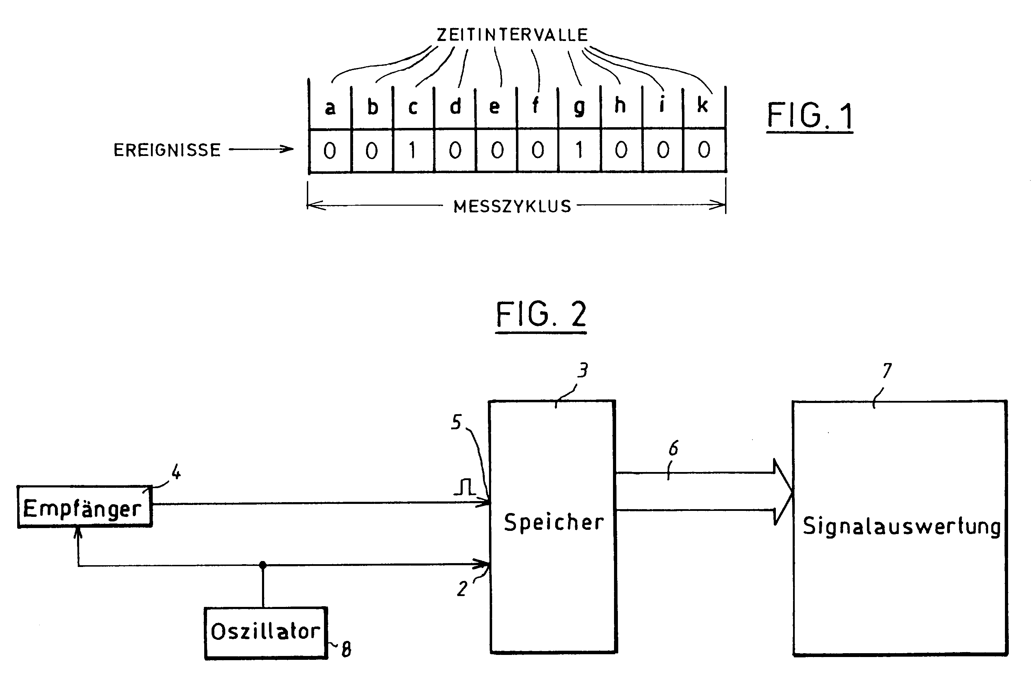

In der Darstellung der Figur 1 ist gezeigt, daß ein Meßzyklus von vorgegebener Dauer in Zeitintervalle, beispielsweise 10, unterteilt wird. Diesen Zeitintervallen, die mit a-k bezeichnet sind, kann entsprechend der Laufzeit der Lichtimpulse eine Entfernung zugeordnet werden, beispielsweise von 10-100 m. Wenn in einem Zeitintervall ein Ereignis in Form eines auftreffenden reflektierten Lichtimpulses eintritt, wird dieses als Ja-Information (1) bzw. als Logikpegel gespeichert. Wenn in einem Zeitintervall kein Ereignis auftritt, so wird in diesem betreffenden Zeitintervall die Information Nein (0) bzw. ein komplementärer Logikpegel gespeichert.

Aus der Darstellung der Figur 2 ergibt sich der Ablauf eines Meßzyklus. Der vom Laserentfernungsmesser ausgesandte Lichtimpuls löst den Meßvorgang aus. Die Länge der Zeitintervalle wird durch einen stabilen Oszillator (8) bestimmt, dessen Taktfrequenz dem Speicher (3) eingegeben wird. Ein optischer Empfänger (4) wandelt die auftreffenden, vom angepeilten Ziel reflektierten Lichtimpulse in Logikimpulse um, die in den Dateneingang (5) des Speichers (3) eingespeist werden. Mit jedem in den Takteingang (2) eingegebenen Taktimpuls wird der auf der Signalleitung vorliegende Logikpegel in den Speicher (3) geschrieben. Eine nicht eingezeichnete, an sich bekannte Signalverarbeitungselektronik sorgt dafür, daß die Zeitdauer eines Logikimpulses in etwa der Länge eines Zeitintervalls entspricht. Die im Speicher (3) gespeicherten Informationen werden mit einer Signalauswertungselektronik, beispielsweise einem Mikroprozessor (7), ausgelesen und weiterverarbeitet bzw. zur Anzeige gebracht.

## Patentansprüche

1. Laserentfernungsmesser, der in einem Meßzyklus einen Lichtimpuls aussendet und damit einen Laufzeit-Meßvorgang zur Entfernungsbestimmung von Gegenständen auslöst, mit
- einem optischen Empfänger (4),
- einem stabilen Oszillator (8)
- einem seriellen 1-bit Speicher (3) und
- einer Signalauswerteelektronik (7),
wobei
der Oszillator (8) den Meßzyklus in Zeitintervalle bestimmter Dauer aufteilt und seine Taktfrequenz als Taktimpulse in den Takteingang (2) des Speichers (3) eingibt,
der Speicher (3) zu jedem Zeitintervall einen Speicherplatz aufweist,
der Empfänger (4) genau die auftreffenden, von den angepeilten Gegenständen reflektierten Lichtimpulse in Logikimpulse umwandelt, deren Dauer in etwa der Länge eines Zeitintervalls entspricht,
die Logikimpulse in den Dateneingang (5) des Speichers (3) eingespeist werden und mit jedem Taktimpuls, der in den Takteingang (2) eingegeben wird, der am Dateneingang (5) vorliegende Pegel der Logikimpulse in den Speicher (3) geschrieben wird und in dem dem momentanen Zeitintervall zugeordneten Speicherplatz abgelegt wird und
die Signalauswerteelektronik (7) zu jedem einzelnen Meßzyklus die in dem Speicher (3) den Zeitintervallen zugeordneten Pegel ausliest und zur Anzeige sämtlicher in einem Meßzyklus vorkommenden Entfernungen von reflektierenden Gegenständen weiterverarbeitet.

## Claims

1. : Laser rangefinder which emits a light pulse during a measuring cycle, thus triggering a time-of-flight measuring process for determining the distance of objects, comprising
- an optical receiver (4)
- a stable oscillator (8)
- a series 1-bit memory (3) and
- a signal evaluation electronic (7),
and
the oscillator (8) divides the measuring cycle into time intervals of specified duration and delivers its beat frequency as beat pulses into the beat input (2) of memory (3);
the memory (3) has a memory spot for each time interval;
the receiver (4) precisely converts hitting light pulses which are reflected by the aimed at objects into logic pulses the duration of which corresponds approximately with the length of one time interval;
the logic pulses are fed into the data input (5) of the memory (3), and with each beat pulse which is fed into the beat input (2) the level of the logic pulses present at the data input (5) is written into memory (3) and deposited in the memory spot which is associated with the momentary time interval; and
the signal evaluation electronic (7) displays for each individual measuring cycle the levels associated in the memory (3) with the time intervals and further processes them to display all ranges of reflecting objects occurring in a measuring cycle.

## Revendications

1. Télémètre à laser qui, dans un cycle de mesure, émet une impulsion de lumière et déclenche ainsi un processus de mesure de temps de vol aux fins de déterminer la distance d'objets, comportant
- un récepteur optique (4),
- un oscillateur stable (8),
- une mémoire 1 bit (3) série et
- une électronique de traitement de signal (7),
l'oscillateur (8) divisant le cycle de mesure en intervalles de temps de durée déterminée et envoyant sa fréquence d'horloge en tant qu'impulsion d'horloge à l'entrée d'horloge (2) de la mémoire (3),
la mémoire (3) comportant un emplacement de mémoire pour chaque intervalle de temps,
les impulsions logiques étant envoyées à l'entrée de données (5) de la mémoire (3) et le niveau des impulsions logiques présent à l'entrée de données (5) étant inscrit dans la mémoire (3) avec chaque impulsion d'horloge appliquée à l'entrée d'horloge (2) et étant placé dans l'emplacement de mémoire associé à l'intervalle de temps instantané et
l'électronique de traitement de signal (7)sélectionnant à chaque cycle de mesure les niveaux associés aux intervalles de temps dans la mémoire (3) et les traitant à des fins d'affichage de toutes les distances d'objets réfléchissants apparaissant dans un cycle de mesure.
